# EUROPÄISCHE PATENTANMELDUNG

(11) **EP 2 228 347 A1**
(43) Veröffentlichungstag der Anmeldung: **15.09.2010**
(21) Anmeldenummer: 09003350.7
(22) Anmeldetag: 07.03.2009
(51) Int. Cl.: C02F 11/12, F26B 17/20

(54) **Verfahren zum weiteren Entwässern von Klärschlamm**

(71) Anmelder: Luwa Air Engineering AG, 8610 Uster (CH)
(72) Erfinder: Faeh, Roman, 8535 Hittnau (CH); Bollier, Walter, 8134 Adliswil (CH)
(74) Vertreter: Schaad, Balass, Menzl & Partner AG

(57) **Zusammenfassung**

Verfahren und Vorrichtung zum weiteren Entwässern von mechanisch entwässertem Klärschlamm. Der Klärschlamm wird mittels einer sich in einem geschlossenen Gehäuse (20) befindenden Förderschnecke (50) entlang der Längsachse d der Förderschnecke (50) in einer Förderrichtung gefördert, wobei zum weiteren Entwässern des Klärschlamms Luft im Wesentlichen senkrecht zur Förderrichtung in das geschlossene Gehäuse (20) eingeblasen wird und der Klärschlamm mit der Luft beaufschlagt wird.

## Beschreibung

Die vorliegende Erfindung betrifft ein Verfahren sowie eine Vorrichtung zum weiteren Entwässern von mechanisch entwässertem Klärschlamm gemäss den Oberbegriffen der Ansprüche 1 und 12.

In besiedelten Gebieten fallen jedes Jahr grosse Mengen von verunreinigtem Wasser aus Haushalten und Industriebetrieben an. Solche Abwässer enthalten allerhand unerwünschter Inhaltsstoffe, wie giftige oder umweltschädliche Substanzen oder Krankheitserreger, aber auch wertvolle Substanzen wie Pflanzennährstoffe. Die Abwässer werden typischerweise einer Kläranlage zugeführt, wo das Wasser filtriert, gereinigt und aufbereitet wird, bevor es wieder an die Umwelt abgegeben werden kann. Zur Reinigung der Abwässer werden mechanische, biologische und chemische Verfahren eingesetzt.

Als Rückstand bleibt Klärschlamm zurück, eine Mischung aus Wasser und Feststoffen. Der Klärschlamm enthält nebst den ursprünglich im Abwasser enthaltenen Feststoffen auch die bei der chemischen und/oder biologischen AbwasserReinigung anfallenden Feststoffe. Klärschlamm weist im Ausgangszustand einen geringen Feststoffgehalt auf. Durch mechanisches Entwässern mittels Schwerkrafteindickung und Zentrifugieren werden Feststoffgehalte von etwa 30-35% erreicht.

Bis vor einigen Jahren wurde ein Grossteil des Klärschlamms zum Düngen von Agrarflächen verwendet. Dadurch konnten die im Klärschlamm enthaltenen Nährstoffe, wie Phosphate oder Stickstoff-Verbindungen, rezykliert werden. Diese Verwertung hat aber, aufgrund von im Klärschlamm ebenfalls enthaltenen Schwermetallen und schwer abbaubaren organischen Schadstoffen, grosse negative Auswirkungen auf die Umwelt. Aus diesem Grund wurde in Europa die Verwendung von Klärschlamm als Düngemittel in der letzen Dekade schrittweise eingeschränkt und in mehreren Ländern komplett verboten. So darf zum Beispiel in der Schweiz seit 2006 überhaupt kein Klärschlamm mehr auf Agrarflächen ausgebracht werden.

Als Konsequenz dieses Verbots musste ein neuer Weg für die Entsorgung von Klärschlamm gefunden werden. Allein in der Schweiz fallen jährlich ca. 200'000 Tonnen Trockenmasse an Klärschlamm an, so dass eine umweltschonende und kostengünstige Entsorgung von grosser Wichtigkeit ist.

Ein Grossteil des anfallenden Klärschlamms wird heute gemäss den gängigen Umweltnormen verbrannt, was aufgrund des hohen organischen Anteils des Klärschlamms gut machbar ist. Dabei kann der Klärschlamm für die Energie-Produktion genutzt werden, was zusätzlich vorteilhaft ist, da die Verbrennung von Abfällen in Bezug auf das Kyoto-Protokoll als CO₂-neutral angesehen wird. Typischerweise wird der mechanisch entwässerte Klärschlamm entweder einer Müllverbrennungsanlage zugeführt, oder er wird zu einem Granulat getrocknet und in einem Zementwerk verbrannt. Der hohe organische Anteil des Klärschlamm-Granulats macht es zu einem wertvollen Alternativ-Brennstoff für die Zementindustrie.

Voraussetzung für die Verwertung von Klärschlamm in einem Zementwerk ist, dass dieser einen Trockensubstanz-Anteil von mindestens 95% aufweist. Deshalb muss der mechanisch entwässerte Klärschlamm vor einer solchen Verwertung zunächst weiter getrocknet werden. Für die Trocknung von mechanisch entwässertem Klärschlamm sind verschiedene Verfahren bekannt, zum Beispiel die Wirbelschichttrocknung, die Trommeltrocknung, die Scheibentrocknung, die Mitteltemperatur-Bandtrocknung, die Niedertemperatur-/Umlufttrocknung oder die solare Trocknung.

Bei der Mitteltemperatur-Bandtrocknung wird der Klärschlamm mittels Förderband durch einen Trockner geführt und dabei mit erwärmter Luft durchströmt. Die Temperatur im Trockner beträgt maximal 85 °C. Dieses Verfahren kann auch mit einer vorgeschalteten Dünnschichtverdampfung kombiniert werden. Ein Niedertemperatur-/Umlufttrockner ist ein Bandtrockner, der mit einem Umluftkreislauf und ohne Schlammrückmischung betrieben wird.

Als besonders energiesparend und umweltfreundlich hat sich die Niedertemperaturtrocknung, wie sie beispielsweise in DE 10 2004 051 975 beschrieben ist, erwiesen. Dabei wird der Klärschlamm mit warmer Luft getrocknet, die eine Temperatur von ca. 50-200 °C, bevorzugt 80-120 °C, aufweist. Die zum Aufheizen der Luft benötigte Wärme kann zum Beispiel durch die Umgebungsluft, Abwärme aus der Kläranlage oder von einem Brenner zur Verfügung gestellt werden.

Für die vollständige Trocknung von mechanisch entwässertem Klärschlamm sind relativ grosse Mengen an Energie nötig. Gewisse Energieeinsparungen sind zwar durch den Einsatz einer Niedertemperaturtrocknung möglich; allerdings steigt dabei die nötige Trocknungsdauer mit abnehmender Trocknungstemperatur, so dass der Klärschlamm sehr lange in der Trocknungsanlage verweilen muss.

Es ist daher eine Aufgabe der vorliegenden Erfindung, die Verweildauer in der letzten Trocknungsstufe zu verkürzen und den für die Trocknung notwendigen Energieaufwand zu senken.

Diese Aufgabe wird gelöst durch das Verfahren gemäss Anspruch 1 und die Vorrichtung gemäss Anspruch 12. Weitere, bevorzugte Ausführungsformen bilden den Gegenstand der abhängigen Ansprüche.

Die vorliegende Erfindung betrifft ein Verfahren zum weiteren Entwässern von mechanisch entwässertem Klärschlamm. Erfindungsgemäss wird der Klärschlamm mittels einer sich in einem geschlossenen Gehäuse befindenden Förderschnecke entlang der Längsachse der Förderschnecke in einer Förderrichtung gefördert. Während des Förderns wird zum weiteren Entwässern des Klärschlamms Luft in das geschlossene Gehäuse eingeblasen, wobei die Luft im Wesentlichen senkrecht zur Förderrichtung eingeblasen wird und der Klärschlamm mit der Luft beaufschlagt wird.

Das erfindungsgemässe Verfahren erlaubt eine effiziente Entfernung von weiterem Wasser aus Klärschlamm, der bereits mechanisch entwässert worden ist. Mechanisch entwässerter Klärschlamm mit einem Feststoffgehalt von 30 bis 35% liegt üblicherweise in relativ grossen Brocken mit einem Durchmesser von ca. 5 bis 10 cm vor, die aufgrund der enthaltenen Feuchtigkeit leicht zusammenkleben. Während des Förderns in der Förderschnecke wird der Klärschlamm ständig umgewälzt, so dass ein Zusammenkleben verhindert und die einzelnen Brocken aufgebrochen werden. Dadurch wird die Klärschlammoberfläche kontinuierlich erneuert, und es werden immer wieder neue Bereiche des Klärschlamms mit der eingeblasenen Luft in Kontakt gebracht. Auf diese Weise wird eine besonders effiziente Entfernung von Wasser aus dem Klärschlamm durch die Luft erreicht, da durch das Umwälzen auch die im Innern der Klärschlamm-Brocken gespeicherte Feuchtigkeit an die Oberfläche gebracht und damit für die Trocknungsluft zugänglich gemacht wird.

Das erfindungsgemässe Verfahren erlaubt es, den Klärschlamm bis zu einem gewünschten Trocknungsgrad zu entwässern. Der Trocknungsgrad wird unter anderem wesentlich durch die Verweildauer des Klärschlamms in der Förderschnecke und damit die Dauer der Beaufschlagung mit Luft bestimmt. Weitere wichtige Faktoren sind die Temperatur und der Feuchtigkeitsgehalt der eingeblasenen Luft. Falls gewünscht, kann der mechanisch entwässerte Klärschlamm auf diese Weise vollständig bis zu einem Feststoffgehalt von > 95% entwässert werden, so dass keine weiteren Trocknungsschritte mehr notwendig sind und er direkt, z. B. in einem Zementwerk, weiterverwertet werden kann.

Alternativ ist es auch möglich, den Klärschlamm mit dem erfindungsgemässen Verfahren nur teilweise zu entwässern und ihn anschliessend einer in einer der vorbekannten letzten Trocknungsstufen fertig zu trocknen. Auf diese Art und Weise kann die Verweildauer in der letzten Trocknungsstufen verkürzt werden und der Energieaufwand für die Trocknung gesenkt werden. Das erfindungsgemässe Verfahren kann beispielsweise zum Vortrocknen von mechanisch entwässertem Klärschlamm verwendet werden, der anschliessend einer Niedertemperaturtrocknungsanlage, wie sie in z. B. in der europäischen Patentanmeldung Nr. 08 009 528.4 beschrieben ist, zugeführt. Die Offenbarung von EP 08 009 528.4 wird diesbezüglich hiermit eingeschlossen.

Vorzugsweise wird der Klärschlamm während des Förderns bis zu einem Feststoffanteil von mindestens 50%, vorzugsweise von mindestens 70% entwässert. Es ist aber auch möglich, dass der Klärschlamm vollständig getrocknet wird, d.h. bis zu einem Feststoffanteil von mindestens 95%. Je nach gewünschtem Trocknungsgrad ist es auch möglich, die Verweildauer des Klärschlamms in der Förderschnecke zu variieren, beispielsweise indem der Klärschlamm durch Ändern der Drehrichtung der Förderschnecke abwechslungsweise vorwärts und rückwärts bewegt wird.

In einer bevorzugten Ausführungsform wird der Klärschlamm während des Förderns zusätzlich mechanisch zerteilt. Durch das mechanische Zerteilen werden die grossen Klärschlamm- Brocken zusätzlich aufgebrochen und zerkleinert und ein Zusammenkleben verhindert, so dass die Oberfläche des Klärschlamms noch weiter vergrössert und das Entwässern zusätzlich erleichtert wird. Ausserdem lässt sich der Klärschlamm leichter und gleichmässiger fördern, wenn er in kleineren Stücken vorliegt, und ein Stau in der Förderschnecke kann weitgehend vermieden werden. Vorzugsweise wird der Klärschlamm während des Förderns soweit zerteilt, dass ein Granulat entsteht. Mit Granulaten mit einer Korngrösse von < 1 cm wurden besonders gute Resultate erzielt.

In einer bevorzugten Ausführungsform wird die Luft im Wesentlichen in vertikaler Richtung von oben in das Gehäuse eingeblasen. Es hat sich gezeigt, dass bei dieser Einblasrichtung die Entwässerung des Klärschlamms effizienter ist, als wenn die Luft seitlich, axial oder von unten zugeführt wird.

In einer bevorzugten Ausführungsform wird die Luft mit einer kolbenförmigen Luftströmung eingeblasen. Luft mit einer kolbenförmigen Luftströmung im Sinne der Erfindung strömt im Wesentlichen homogen und parallel und weist keine Verwirbelungen auf. Es handelt sich hierbei also um eine turbulenzarme Strömung mit über ihren vollen Querschnitt annähernd einheitlicher Verteilung und annähernd gleicher Geschwindigkeit. Diese Strömungsform kann auch als annähernd laminar bezeichnet werden. Die kolbenförmige Strömung wird durch eine minutiöse Kontrolle der Strömungsgeschwindigkeit erreicht. Dabei kommen Strömungsgeschwindigkeiten von ca. 0.3 bis 2.0 m/s in Betracht, vorzugsweise 0.3 bis 0.8 m/s. Eine Vorrichtung zur Erzeugung einer solchen kolbenförmigen Luftströmung ist beispielsweise in CH 684101 beschrieben. Es hat sich gezeigt, dass das Beaufschlagen mit einer kolbenförmigen Luftströmung den Trocknungswirkungsgrad maximiert und damit optimal ist, um mit relative geringen Luftmengen möglichst viel Wasser aus dem Klärschlamm zu entfernen.

In einer bevorzugten Ausführungsform wird die eingeblasene Luft zumindest teilweise rezirkuliert. Dazu wird die bereits zum Entwässern verwendete Luft aus der Förderschnecke zunächst entwässert, beispielsweise durch Abkühlen in einem Kaltwasserluftwäscher, und anschliessend wieder auf die gewünschte Trocknungstemperatur gebracht, bevor sie wiederum in das Gehäuse der Förderschnecke eingeblasen wird. Durch das Rezirkulieren der Luft kann insbesondere die Geruchs- und Schadstoffbelastung der Umwelt gering gehalten werden. Ausserdem ist es auch möglich, die zum Entwässern des Klärschlamms verwendete Luft auch in einer nachgeschalteten Trocknungsanlage für den Klärschlamm zu verwenden, beispielsweise in einem Verfahren gemäss EP 08 009 528.4.

In einer bevorzugten Ausführungsform wird zum weiteren Entwässern des mechanisch entwässerten Klärschlamms zumindest teilweise Frischluft verwendet. Besonders vorteilhaft ist es, die Anteile an Frischluft und rezirkulierter Luft an die äusseren Wetterbedingungen, d.h. Temperatur, Druck und Feuchtigkeitsgehalt der Umgebungsluft, anzupassen. Auf diese Art und Weise kann der Energiebedarf für das weitere Entwässern des Klärschlamms minimiert werden.

In einer bevorzugten Ausführungsform weist die eingeblasene Luft eine Temperatur von 20 bis 60 °C, vorzugsweise von 35 bis 45 °C auf. Bei diesen relativ tiefen Temperaturen erfolgt eine optimale Entwässerung bei möglichst geringem Energieaufwand.

In einer bevorzugten Ausführungsform weist die eingeblasene Luft einen Wassergehalt von weniger als 7 g/kg auf. Vorzugsweise weist die eingeblasene Luft eine Enthalpie von weniger als 60 kJ/kg auf. Bei diesem tiefen Enthalpie- oder Wassergehaltniveau reduziert sich die Geruchsbelästigung auf ein Minimum.

Im Weiteren betrifft die vorliegende Erfindung eine Anlage zum weiteren Entwässern von mechanisch entwässertem Klärschlamm. Die erfindungsgemässe Anlage umfasst ein geschlossenes Gehäuse mit einem Klärschlammeinlass zum Zuführen von mechanisch entwässerten Klärschlamm, einem Klärschlammauslass zum Abführen des weiter entwässerten Klärschlamms, einer Förderschnecke zum Fördern des Klärschlamms in einer Förderrichtung vom Klärschlammeinlass zum Klärschlammauslass und mindestens einen Lufteinlass zum Einblasen von Luft. Der Lufteinlass ist derart angeordnet, dass die Luft im Wesentlichen senkrecht zur Förderrichtung eingeblasen wird und der Klärschlamm mit der Luft beaufschlagt wird. Besonders vorteilhaft ist es, wenn nahezu auf der ganzen Länge der Förderschnecke Luft eingeblasen wird.

Je nach gewünschter Klärschlamm-Durchsatzmenge werden vorzugsweise die Dimensionen der Förderschnecke und damit auch der gesamten Entwässerungsanlage grösser oder kleiner gewählt. Vorzugsweise weist die Förderschnecke einen Durchmesser von 10 bis 80 cm auf. In einer bevorzugten Ausführungsform werden zusätzlich die Grösse des Lufteinlasses und die zugeführte Luftmenge an die gewünschte Durchsatzmenge und die Klärschlamm-Zusammensetzung angepasst und somit anlagenspezifisch bemessen. Dadurch ist der Fachmann in der Lage, die Betriebsparameter optimal auf den zu entwässernden Klärschlamm abzustimmen.

In einer bevorzugten Ausführungsform handelt es sich bei der Förderschnecke um eine sog. Trogförderwendelschnecke, also um eine in einem trogförmigen Gehäuse gelagerte, wendel- oder spiralförmige Förderschnecke, die um ihre Längsachse rotiert. Vorzugsweise handelt es sich dabei um eine Hohlschnecke ohne mittige Drehwelle, die in Achsrichtung einen zentralen, im Wesentlichen kreiszylinderförmigen Hohlraum aufweist. Besonders vorteilhaft ist es, wenn die Förderschnecke nur einseitig, d.h. auf der Antriebs- bzw. Motorseite gelagert ist und sonst im Gehäuse drehbar und senkrecht zur Förderrichtung beweglich ist. So kann die Förderschnecke grösseren Klärschlammbrocken "ausweichen" und eine Beschädigung des Gehäuses oder der Förderschnecke verhindert werden.

In einer bevorzugten Ausführungsform befindet sich im geschlossenen Gehäuse oberhalb des Klärschlamms ein Luftvolumen. In diesem Fall ist das Gehäuse der Förderschnecke also nicht vollständig mit Klärschlamm gefüllt, sondern weist teilweise noch einen Leerraum auf, so dass der Klärschlamm leichter gefördert werden kann und der Kontakt des Klärschlamms mit der Luft erleichtert wird. Das Luftvolumen oberhalb des Klärschlamms erlaubt insbesondere ein einfacheres Zu- und Abführen von Trocknungsluft, so dass die weitere Entwässerung des Klärschlamms effizienter wird.

In einer bevorzugten Ausführungsform weist das geschlossene Gehäuse zusätzlich mindestens einen Luftauslass zum Abführen der Luft auf, welcher in einer im Wesentlichen parallel zur Förderrichtung verlaufenden Wand des Gehäuses angeordnet ist. Dadurch kann die Trockenluft seitlich aus der Förderschneckenanlage entfernt werden und muss nicht zusammen mit dem Klärschlamm beim Klärschlammauslass aus dem Gehäuse entfernt werden. Vorzugsweise ist der Querschnitt des Luftauslasses kleiner als derjenige des Lufteinlasses, so dass im Innern der erfindungsgemässen Anlage ein Überdruck entsteht und der Trocknungseffekt optimiert wird.

In einer bevorzugten Ausführungsform ist der Lufteinlass senkrecht oberhalb des Klärschlamms angeordnet. Dadurch wird erreicht, dass die Luft im Wesentlichen senkrecht von oben auf den Klärschlamm geblasen wird.

Je nach Zusammensetzung des zu entwässernden Klärschlamms und je nach gewünschtem Trocknungsgrad kann es vorteilhaft sein, die Menge an zugeführter Luft über die Länge der Förderschnecke zu variieren. So kann beispielsweise im Bereich des Klärschlammeinlasses eine grössere Menge an Luft zugeführt werden als im Bereich des Klärschlammauslasses. In diesem Fall weist die erfindungsgemässe Anlage zum weiteren Entwässern von mechanisch entwässertem Klärschlamm vorzugsweise mehrere Luftauslässe auf, die über die Länge der Förderschnecke verteilt sind und unterschiedlich belastet werden.

In einer bevorzugten Ausführungsform weist die Förderschnecke abstehende, mechanische Trennelemente auf zur mechanischen Zerteilung des Klärschlamms. Diese mechanischen Trennelemente können beispielsweise in Form von Spitzen, Stäben oder Zacken ausgebildet sein, und können einstückig mit der Förderschnecke ausgeformt oder daran befestigt, beispielsweise angeschweisst, sein. Die mechanischen Trennelemente können im Wesentlichen gleichmässig über die Länge der Förderschnecke verteilt sein. Es ist aber auch möglich, dass in einem ersten, zum Klärschlammeinlass benachbarten Bereich der Förderschnecke relativ weit auseinander liegende Trennelemente vorhanden sind, während die Abstände zwischen den einzelnen Trennelementen in einem zweiten, zum Klärschlammauslass benachbarten Bereich kleiner gewählt werden. Alternativ können die Trennelemente auch im ersten Bereich relativ dicht beieinander liegen und im zweiten Bereich weiter auseinander.

Die vorliegende Erfindung wird anhand der Figuren weiter veranschaulicht. Es zeigen:
- Fig. 1a-e: eine erste Ausführungsform einer erfindungsgemässen Anlage zum weiteren Entwässern von mechanisch entwässertem Klärschlamm;
- Fig. 2a-d: eine zweite Ausführungsform einer erfindungsgemässen Anlage zum weiteren Entwässern von mechanisch entwässertem Klärschlamm;
- Fig. 3a-e: eine dritte Ausführungsform einer erfindungsgemässen Anlage zum weiteren Entwässern von mechanisch entwässertem Klärschlamm;
- Fig. 4a-c: eine erste Ausführungsform einer Förderschnecke mit mechanischen Trennelementen;
- Fig. 5a-c: eine zweite Ausführungsform einer Förderschnecke mit mechanischen Trennelementen;
- Fig. 6a-c: eine dritte Ausführungsform einer Förderschnecke mit mechanischen Trennelementen.

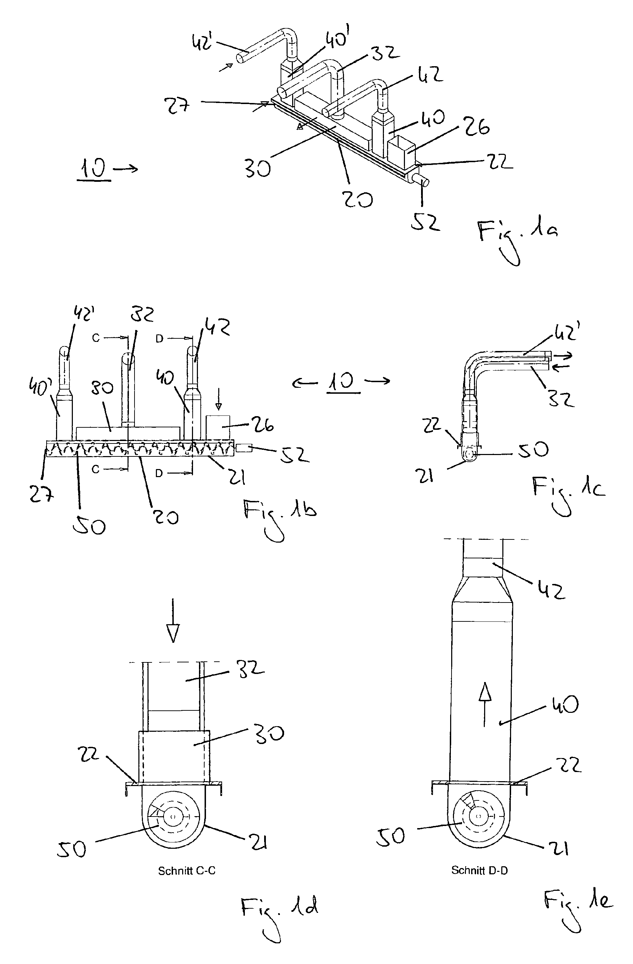

Die in Fig. 1a in einer räumlichen Darstellung gezeigte erfindungsgemässe Anlage 10 zum weiteren Entwässern von mechanisch entwässertem Klärschlamm ist in Fig. 1b in einer Frontansicht und in Fig. 1c in einer Seitenansicht gezeigt. Fig. 1d und 1e zeigen einen Schnitt entlang der Linien C-C respektive D-D aus Fig. 1b. Die Anlage 10 weist ein geschlossenes Gehäuse 20 aus Metall mit einem trogförmigen Behälter 21 und einem Deckel 22 auf. Im Gehäuse 20 ist eine Förderschnecke 50 beweglich gelagert. Das Gehäuse 20 weist an einem Ende an der Oberseite einen Klärschlammeinlass 26 auf und am gegenüberliegenden Ende auf der Stirnseite einen Klärschlammauslass 27. An der Oberseite des Gehäuses 20 ist ein Lufteinlass 30 zum Einblasen von Luft in das Gehäuse 20 angeordnet. Der Lufteinlass 30 erstreckt sich über einen Grossteil der Länge der Förderschnecke 50 und wird durch ein Luftzufuhrrohr 32 mit Luft versorgt. In Längsrichtung vor und hinter dem Lufteinlass 30 weist das Gehäuse 20 zwei Luftauslässe 40, 40' zum Abführen der Luft aus dem Gehäuse 20 auf. Von dort wird die Luft über zwei Luftabfuhrrohre 42, 42' aus der Anlage 10 entfernt. Der Lufteinlass 30 und die Luftauslässe 40, 40' weisen einen rechteckigen Querschnitt auf, wobei der Querschnitt auch eine andere Form haben und zum Beispiel rund oder oval sein könnte. Die Fläche des Querschnitts des Lufteinlasses 30 ist grösser als die Summe der Flächen der Querschnitte der beiden Luftauslässe 40, 40'. Die Förderschnecke 50 ist mit einem Motor 52 verbunden, welcher an einer Stirnseite des Gehäuses 20 angeordnet ist, und weist keine weiteren Befestigungsstellen auf. Daher ist die Förderschnecke 50 nicht nur um ihre Längsachse drehbar, sondern auch senkrecht zur Längsachse beweglich. Die Förderschnecke 50 dient dazu, den zu entwässernden Klärschlamm während des Förderns umzuwälzen und so das Entwässern zu erleichtern.

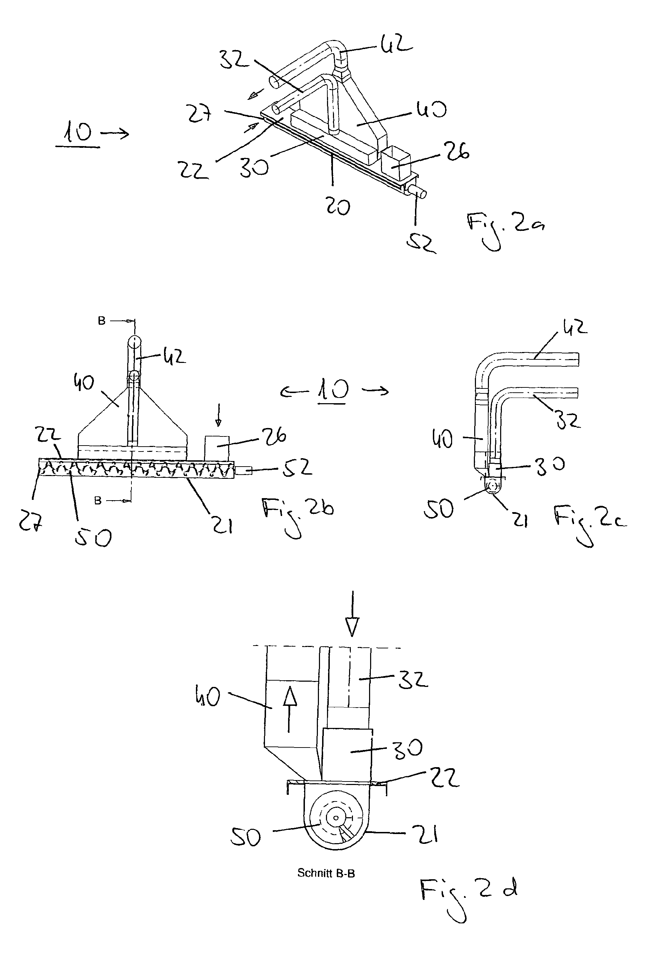

Die in Fig. 2a in einer räumlichen Darstellung gezeigte erfindungsgemässe Anlage 10 zum weiteren Entwässern von mechanisch entwässertem Klärschlamm ist in Fig. 2b in einer Frontansicht und in Fig. 2c in einer Seitenansicht gezeigt. Fig. 2d zeigt einen Schnitt entlang der Linien B-B aus Fig. 2b. Die Anlage 10 weist ein geschlossenes Gehäuse 20 aus Metall mit einem trogförmigen Behälter 21 und einem Deckel 22 auf. Im Gehäuse 20 ist eine Förderschnecke 50 beweglich gelagert. Das Gehäuse 20 weist an einem Ende an der Oberseite einen Klärschlammeinlass 26 auf und am gegenüberliegenden Ende auf der Stirnseite einen Klärschlammauslass 27. An der Oberseite des Gehäuses 20 ist ein Lufteinlass 30 zum Einblasen von Luft in das Gehäuse 20 angeordnet. Der Lufteinlass 30 erstreckt sich über einen Grossteil der Länge der Förderschnecke 50 und wird durch ein Luftzufuhrrohr 32 mit Luft versorgt. In Längsrichtung parallel zum Lufteinlass 30 weist das Gehäuse 20 einen Luftauslass 40 zum Abführen der Luft aus dem Gehäuse 20 auf. Von dort wird die Luft über ein Luftabfuhrrohr 42 aus der Anlage 10 entfernt. Der Lufteinlass 30 und der Luftauslass 40 weisen einen rechteckigen Querschnitt auf, wobei der Querschnitt auch eine andere Form haben und zum Beispiel rund oder oval sein könnte. Die Fläche des Querschnitts des Lufteinlasses 30 ist grösser als die Fläche des Querschnitts des Luftauslasses 40. Die Förderschnecke 50 ist mit einem Motor 52 verbunden, welcher an einer Stirnseite des Gehäuses 20 angeordnet ist, und weist keine weiteren Befestigungsstellen auf. Daher ist die Förderschnecke 50 nicht nur um ihre Längsachse drehbar, sondern auch senkrecht zur Längsachse beweglich. Die Förderschnecke 50 dient dazu, den zu entwässernden Klärschlamm während des Förderns umzuwälzen und so das Entwässern zu erleichtern.

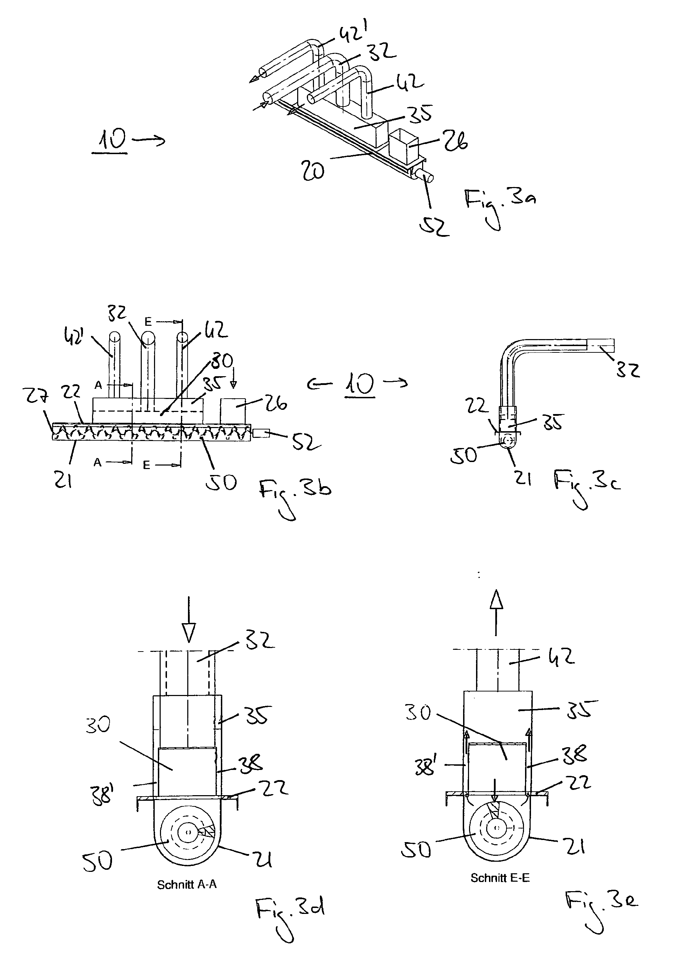

Die in Fig. 3a in einer räumlichen Darstellung gezeigte erfindungsgemässe Anlage 10 zum weiteren Entwässern von mechanisch entwässertem Klärschlamm ist in Fig. 3b in einer Frontansicht und in Fig. 3c in einer Seitenansicht gezeigt. Fig. 3d und 3e zeigen einen Schnitt entlang der Linien A-A respektive E-E aus Fig. 3b. Die Anlage 10 weist ein geschlossenes Gehäuse 20 aus Metall mit einem trogförmigen Behälter 21 und einem Deckel 22 auf. Im Gehäuse 20 ist eine Förderschnecke 50 beweglich gelagert.

Das Gehäuse 20 weist an einem Ende an der Oberseite einen Klärschlammeinlass 26 auf und am gegenüberliegenden Ende auf der Stirnseite einen Klärschlammauslass 27. An der Oberseite des Gehäuses 20 ist ein Luftbehälter 35 angeordnet, der zum Zu- und Abführen von Luft dient. Der Luftbehälter 35 erstreckt sich über einen Grossteil der Länge der Förderschnecke 50 und weist einen integrierten, darin eingebauten Lufteinlass 30 mit gleicher Länge aber geringerer Breite als der Luftbehälter 35 auf. Der Lufteinlass 30 wird durch ein Luftzufuhrrohr 32, das den Luftbehälter 35 durchdringt, mit Luft versorgt, so dass über die gesamte rechteckige Querschnittsfläche des Lufteinlasses 30 Luft in das Gehäuse 20 eingeblasen werden kann. Die Seitenwände des Lufteinlasses 30 bilden zusammen mit den Seitenwänden des Luftbehälters 35 Längsschlitze 38, 38' auf, durch welche die Luft aus dem Gehäuse 20 entfernt und in den oberen Bereich des Luftbehälters 35 geführt werden kann. Über zwei Luftabfuhrrohre 42, 42', welche in den Luftbehälter 35 münden, kann die Luft aus dem Luftbehälter 35 entfernt werden. Die Förderschnecke 50 ist mit einem Motor 52 verbunden, welcher an einer Stirnseite des Gehäuses 20 angeordnet ist, und weist keine weiteren Befestigungsstellen auf. Daher ist die Förderschnecke 50 nicht nur um ihre Längsachse drehbar, sondern auch senkrecht zur Längsachse beweglich. Die Förderschnecke 50 dient dazu, den zu entwässernden Klärschlamm während des Förderns umzuwälzen und so das Entwässern zu erleichtern.

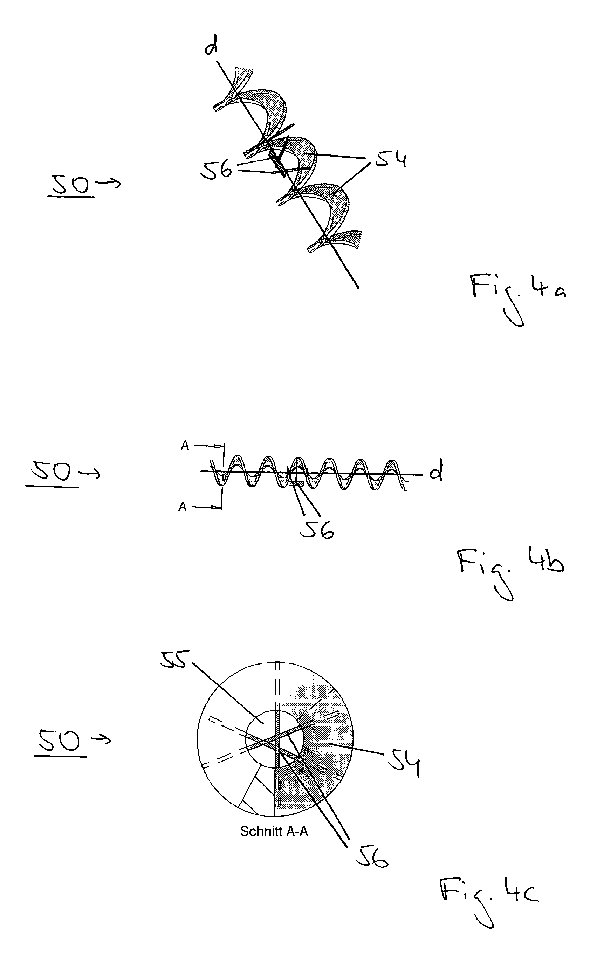

Die in Fig. 4a in einer räumlichen Darstellung gezeigte Förderschnecke 50 ist in Fig. 4b in einer Seitenansicht und in Fig. 4c im Querschnitt gezeigt. Bei der Förderschnecke 50 handelt es sich um eine Wendelschnecke aus Metall. Die Förderschnecke 50 weist eine spiralförmige Förderfläche 54 zum Fördern des Klärschlamms auf und einen durch diesen begrenzten, entlang der mittigen Längsachse d der Förderschnecke 50 verlaufenden, im Wesentlichen kreiszylinderförmigen Hohlraum 55. An die Förderfläche 54 sind stabförmige Trennelemente 56 zum mechanischen Zerteilen des Klärschlamms angeschweisst, wobei die stabförmigen Trennelemente 56 jeweils an einem Ende mit der spiralförmigen Förderfläche 54 verbunden sind und in den Hohlraum 55 hineinragen.

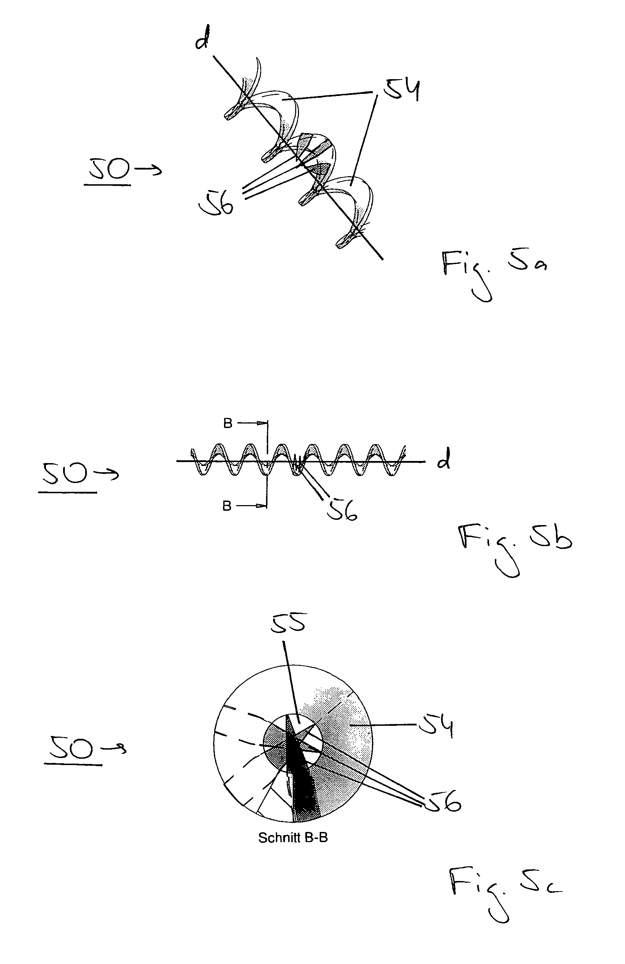

Die in Fig. 5a in einer räumlichen Darstellung gezeigte Förderschnecke 50 ist in Fig. 5b in einer Seitenansicht und in Fig. 5c im Querschnitt gezeigt. Bei der Förderschnecke 50 handelt es sich um eine Wendelschnecke aus Metall. Die Förderschnecke 50 weist eine spiralförmige Förderfläche 54 zum Fördern des Klärschlamms auf und einen durch diesen begrenzten, entlang der mittigen Längsachse d der Förderschnecke 50 verlaufenden, im Wesentlichen kreiszylinderförmigen Hohlraum 55. An die Förderfläche 54 sind zackenförmige Trennelemente 56 zum mechanischen Zerteilen des Klärschlamms angeschweisst, wobei die zackenförmigen Trennelemente 56 jeweils an einem Ende mit der spiralförmigen Förderfläche 54 verbunden sind und in den Hohlraum 55 hineinragen.

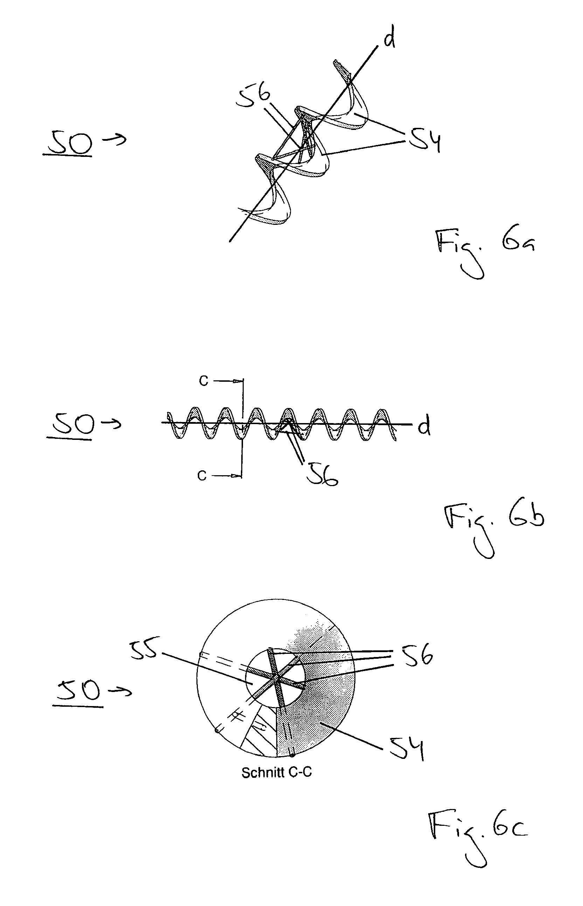

Die in Fig. 6a in einer räumlichen Darstellung gezeigte Förderschnecke 50 ist in Fig. 6b in einer Seitenansicht und in Fig. 6c im Querschnitt gezeigt. Bei der Förderschnecke 50 handelt es sich um eine Wendelschnecke aus Metall. Die Förderschnecke 50 weist eine spiralförmige Förderfläche 54 zum Fördern des Klärschlamms auf und einen durch diesen begrenzten, entlang der mittigen Längsachse d der Förderschnecke 50 verlaufenden, im Wesentlichen kreiszylinderförmigen Hohlraum 55. An die Förderfläche 54 sind stabförmige Trennelemente 56 zum mechanischen Zerteilen des Klärschlamms angeschweisst, wobei die stabförmigen Trennelemente 56 an beiden Enden mit der spiralförmigen Förderfläche 54 verbunden sind und den Hohlraum 55 durchkreuzen.

## Patentansprüche

1. Verfahren zum weiteren Entwässern von mechanisch entwässertem Klärschlamm, wobei der Klärschlamm mittels einer sich in einem geschlossenen Gehäuse (20) befindenden Förderschnecke (50) entlang der Längsachse d der Förderschnecke (50) in einer Förderrichtung gefördert wird, wobei zum weiteren Entwässern des Klärschlamms Luft im Wesentlichen senkrecht zur Förderrichtung in das geschlossene Gehäuse (20) eingeblasen wird und der Klärschlamm mit der Luft beaufschlagt wird.

2. Verfahren gemäss Anspruch 1, **dadurch gekennzeichnet, dass** der Klärschlamm während des Förderns zusätzlich mechanisch zerteilt wird.

3. Verfahren gemäss Anspruch 2, **dadurch gekennzeichnet, dass** der Klärschlamm durch an der Förderschnecke (50) ausgeformte oder daran befestigte mechanische Trennelemente (56) mechanisch zerteilt wird.

4. Verfahren gemäss einem der Ansprüche 1 bis 3, **dadurch gekennzeichnet, dass** sich im geschlossenen Gehäuse (20) oberhalb des Klärschlamms ein Luftvolumen befindet und die Luft in dieses Luftvolumen eingeblasen wird.

5. Verfahren gemäss einem der Ansprüche 1 bis 4, **dadurch gekennzeichnet, dass** die Luft im Wesentlichen in vertikaler Richtung von oben eingeblasen wird.

6. Verfahren gemäss einem der Ansprüche 1 bis 5, **dadurch gekennzeichnet, dass** die Luft mit einer kolbenförmigen Luftströmung eingeblasen wird.

7. Verfahren gemäss einem der Ansprüche 1 bis 6, **dadurch gekennzeichnet, dass** die eingeblasene Luft zumindest teilweise rezirkuliert wird.

8. Verfahren gemäss einem der Ansprüche 1 bis 7, **dadurch gekennzeichnet, dass** zumindest teilweise Frischluft verwendet wird.

9. Verfahren gemäss einem der Ansprüche 1 bis 8, **dadurch gekennzeichnet, dass** die eingeblasene Luft eine Temperatur von 20 bis 60 °C, vorzugsweise von 35 bis 40 °C aufweist.

10. Verfahren gemäss einem der Ansprüche 1 bis 9, **dadurch gekennzeichnet, dass** die eingeblasene Luft einen Wassergehalt von weniger als 7 g/kg aufweist.

11. Verfahren gemäss einem der Ansprüche 1 bis 10, **dadurch gekennzeichnet, dass** der Klärschlamm während des Förderns bis zu einem Feststoffanteil von mindestens 50%, vorzugsweise von mindestens 70% entwässert wird.

12. Anlage (10) zum weiteren Entwässern von mechanisch entwässertem Klärschlamm, umfassend ein geschlossenes Gehäuse (20) mit einem Klärschlammeinlass (26) zum Zuführen von mechanisch entwässertem Klärschlamm, einem Klärschlammauslass (27) zum Abführen des weiter entwässerten Klärschlamms, einer Förderschnecke (50) zum Fördern des Klärschlamms in einer Förderrichtung vom Klärschlammeinlass (26) zum Klärschlammauslass (27) und mindestens einem Lufteinlass (30) zum Einblasen von Luft, wobei der Lufteinlass (30) derart angeordnet ist, dass die Luft im Wesentlichen senkrecht zur Förderrichtung eingeblasen wird und der Klärschlamm mit der Luft beaufschlagt wird.

13. Anlage (10) gemäss Anspruch 12, **dadurch gekennzeichnet, dass** das geschlossene Gehäuse (20) zusätzlich mindestens einen Luftauslass (40) zum Abführen der Luft aufweist, welcher in einer im Wesentlichen parallel zur Förderrichtung verlaufenden Wand des Gehäuses (20) angeordnet ist.

14. Anlage (10) gemäss Anspruch 12 oder 13, **dadurch gekennzeichnet, dass** der Lufteinlass (40) senkrecht oberhalb des Klärschlamms angeordnet ist.

15. Anlage (10) gemäss einem der Ansprüche 12 bis 14, **dadurch gekennzeichnet, dass** die Förderschnecke (50) abstehende mechanische Trennelemente (56) aufweist zur mechanischen Zerteilung des Klärschlamms.
